# EUROPEAN PATENT SPECIFICATION

(11) **EP 4 103 388 B1**
(45) Date of publication and mention of the grant of the patent: **10.12.2025**
(21) Application number: 21702501.4
(22) Date of filing: 02.02.2021
(51) Int. Cl.: B29C 45/72, B29C 45/42, B29K 105/00

(54) **DEVICE FOR THE COOLING AND EXTRACTION OF PREFORMS FOR THE MANUFACTURE OF PLASTIC CONTAINERS**
VORRICHTUNG ZUR KÜHLUNG UND EXTRAKTION VON VORFORMEN ZUR HERSTELLUNG VON KUNSTSTOFFBEHÄLTERN
DISPOSITIF DE REFROIDISSEMENT ET D'EXTRACTION DE PRÉFORMES POUR LA FABRICATION DE RÉCIPIENTS EN MATIÈRE PLASTIQUE

(30) Priority: 12.02.2020 IT 202000002722
(43) Date of publication of application: 21.12.2022
(60) Divisional application: 25210829.5
(73) Proprietor: Sacmi Imola S.C., 40026 Imola (IT)
(72) Inventor: SASSATELLI, Gastone, 40027 MORDANO (IT); PENAZZI, Davide, 40026 IMOLA (IT)
(74) Representative: Modiano, Micaela Nadia
(86) International application number: PCT/EP2021/052440
(87) International publication number: WO 2021/160474

(56) References cited:
- JP-A- 2016 190 475
- US-A1- 2006 121 153
- US-A1- 2013 099 420

## Description

The present invention relates to a device for the cooling and extraction of preforms for the manufacture of plastic containers.

Devices are known for unloading and storing preforms for the manufacture of plastic containers, which are normally constituted by a cooling plate which forms a plurality of receptacles arranged like a matrix and designed to accommodate respective preforms that are still warm for the time necessary to cool them at least partially.

Typically, such preforms are fed directly from the injection molding press to the cooling plate and remain in the respective receptacle for a preset time.

Specifically, once the injection process, i.e. the step in which the male and female mold parts remain in a closed position, has ended, the mold opens and the cooling plate is moved towards the preforms partially accommodated in one of the two mold parts so that the receptacles of the cooling plate can engage with respective portions of preforms emerging from the mold part and extracted therefrom so as to allow the closure of the mold and a new molding cycle.

The unloading of the preforms from the cooling plate occurs as a consequence of an expulsion action that can be obtained with pneumatic means, mechanical means, or a combination thereof.

After the expulsion from the cooling plate by the pusher elements, the preforms, by now at least partially cooled, fall by gravity onto a conveyor belt, which then makes them fall, again by gravity, into a container.

The solution described above, while being widely used, is not however free from drawbacks.

First of all, the preforms, although they have undergone a certain cooling, still have some of their portions, typically the bottom one, that are not perfectly rigid and therefore falls can cause localized deformations.

Furthermore, the cooling times are in many cases quite long and this does not allow to optimize the productivity of the apparatus as a whole.

A solution is known from EP0947304 in the name of Husky which allows to speed up the cooling process by using a jet of air to lower the temperature of the internal surface of the preforms. Patent document JP 2016 190475 A depicts a device for the cooling and extraction of preforms for the manufacture of plastic containers comprising a grip assembly.

In particular, said patent document describes a preform molding and cooling apparatus that provides for the removal of the preforms from the preform mold when they are not completely cooled and the subsequent cooling of the preforms outside the molding area; the described solution teaches to perform the cooling of the preforms by injecting a jet of air inside the preforms, cooling the outside of the preform in a classical way, i.e., by cooling the receptacle by means of a coolant fluid, or by convection.

Other similar solutions provide for cooling the inside of the preforms by using jets of air.

However, known solutions have a certain complexity from a constructive standpoint, since they have to manage on the same cooling plate both the operations for introducing air to be directed inside the preforms and the removal of the preforms from the grip hand in order to subsequently unload them.

In some cases, plates have been proposed in which the same elements might selectively provide the jet of air, in order to cool the preforms, or the vacuum to extract them from the grip hand.

As an alternative, solutions have been devised in which the cooling plate supports a plurality of blow molding elements and a plurality of grip elements.

The aim of the present invention is to eliminate, or at least reduce drastically, the drawbacks mentioned above.

Within this aim, an object of the invention is to provide a device for the cooling and extraction of preforms for the manufacture of plastic containers that allows to cool and extract, in an extremely practical and effective manner, the preforms from the grip assembly.

Another object of the invention is to provide a device for the cooling and extraction of preforms for the manufacture of plastic containers that allows to manage in an optimum manner both the cooling operations and the unloading operations, simplifying the movements of the various components so as to optimize both operations.

This aim and these and other objects which will become better apparent hereinafter are achieved by a device for the cooling and extraction of preforms for the manufacture of plastic containers according to the provisions of claim 1.

Further characteristics and advantages of the invention will become better apparent from the description of some preferred but not exclusive embodiments of a device for the cooling and extraction of preforms for the manufacture of plastic containers according to the invention, illustrated by way of non-limiting example in the accompanying drawings, wherein:
Figure 1 is a top plan view of a portion of an apparatus for the manufacture of preforms;
Figure 2 is a top view of an embodiment of a portion of the device for the cooling and extraction of preforms according to the invention;
Figure 3 is a perspective view of the cooling and extraction assembly; not all the preforms have been shown in this view in order to allow a partial view of the surface of the cooling plate;
Figure 3a is a view, similar to Figure 3, of a constructive variation;
Figures 4 and 5 are sectional views of the cooling and extraction assembly when the unloading plate is in a position closer to the cooling plate;
Figure 6 is a sectional view, similar to the one of Figure 4 and 5 but with the unloading plate in a position that is spaced from the cooling plate;
Figure 7 is a view, similar to Figure 3, of a constructive variation of the cooling and extraction assembly in which, for the sake of greater clarity, the unloading plate has not been shown;
Figure 8 is a view, similar to the preceding one, of the constructive variation of Figure 7, in which the cooling channels and the grip bodies are shown;
Figure 9 is a rear view of the cooling and extraction assembly of Figure 7, in which the unloading plate has not been shown for the sake of greater clarity.

With reference to the figures, the present invention relates to a device, generally designated by the reference numeral 1, for the cooling and extraction of preforms 10 for the manufacture of plastic containers.

The device 1 comprises at least one grip assembly 2 which forms a plurality of receptacles for respective preforms 10 and means for transferring the still warm preforms from a molding device, for example an injection molding device, to the grip assembly 2.

The device 1 has a cooling and extraction assembly 20.

The cooling and extraction assembly 20 is designed to cool the preforms 10 arranged at the grip assembly 2 and to extract the cooled preforms 10 from the grip assembly 2.

The cooling and extraction assembly 20 comprises a cooling plate 21 which is arranged, at least in one operating condition thereof, so as to face the grip assembly 2.

The cooling plate 21 can, in particular, move on command with respect to the grip assembly 2 between a position that is closer to the grip assembly 2 and a position that is spaced from the grip assembly 2.

In this regard, the cooling plate 21 can be movable, by virtue of motor means, with respect to a supporting structure that is fixed or connected kinematically to a movable element in order to move into the operating condition in which it is closer to the grip assembly 2.

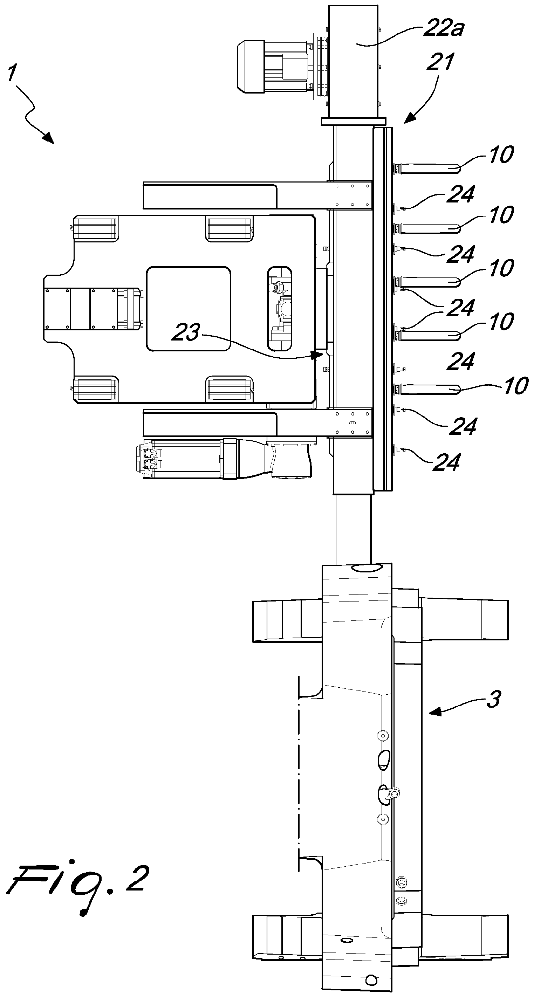

With reference to Figure 2, according to one possible embodiment, the cooling plate 21 can be connected to the movable plane 3 of the press of the molding device.

In this manner, the approach/spacing movement of the cooling plate 21 does not require dedicated motor means but is determined by the opening and closing movement of the press itself.

The cooling plate 21 supports a plurality of cooling channels 22.

The cooling channels 22 are functionally connected to a device for the production of an air flow, constituted for example by a blower 22a or by a compressor.

In one embodiment, the device for producing an air flow can be integral with the cooling plate 21.

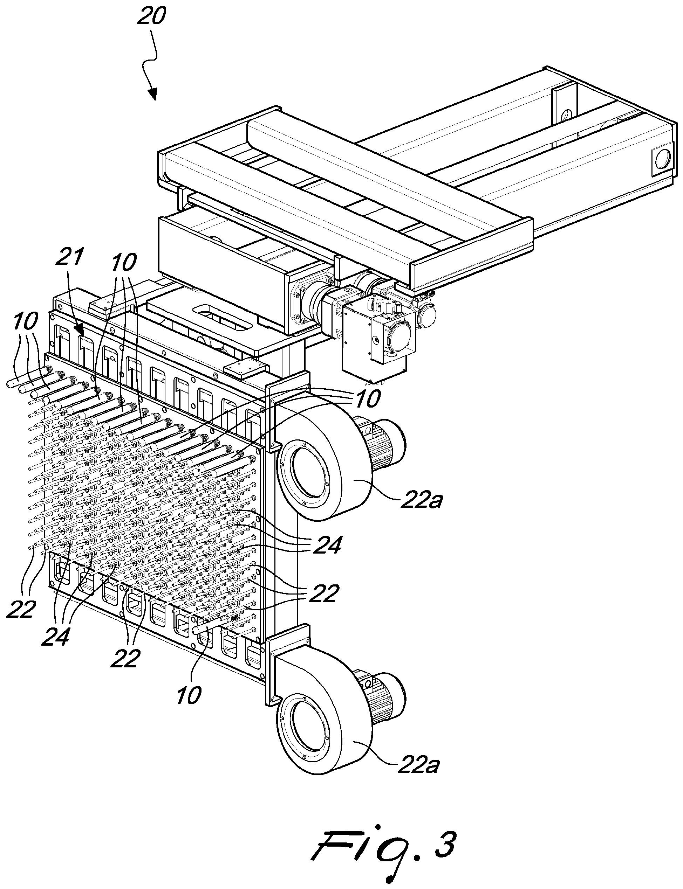

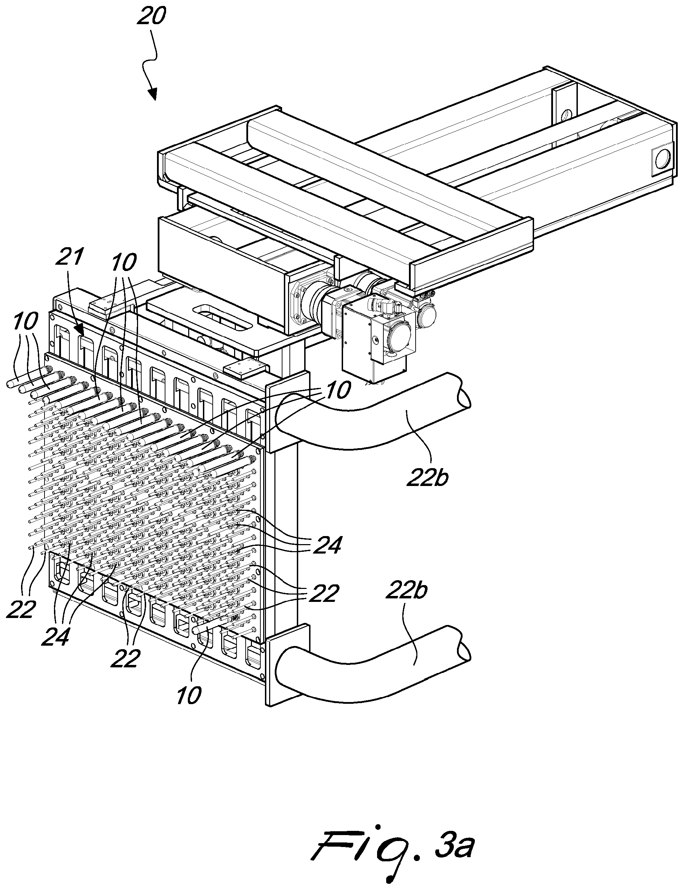

In another embodiment, shown in Figure 3a, the device for producing an air flow is connected to fixed elements of the line and is fluidically connected to the cooling plate 21 for example by means of flexible tubular elements 22b.

The device for producing an air flow may also be associated with cooling means which comprise, for example, a heat exchanger and are adapted to thermally condition the air flow.

In this configuration, the device for producing the flow and the cooling means are preferably connected to fixed elements of the line.

The cooling channels 22 are designed, with the cooling plate 21 in the closer position, to lead into a respective preform 10 accommodated in a respective receptacle 3 in order to convey a jet of air inside the preform 10, so as to increase its cooling rate.

Furthermore, the cooling and extraction assembly 20 comprises an unloading plate 23, which is arranged on the opposite side of the grip assembly 2 with respect to the cooling plate 21.

The unloading plate 23 supports a plurality of grip bodies 24, which can be moved on command in order to pass through the cooling plate so as to engage selectively, when the cooling plate 21 is in the closer position, with a respective preform 10 in order to allow its extraction from the respective receptacle 3.

Advantageously, the grip assembly 2 comprises a grip plate 4 which supports a plurality of receptacles 3 for a respective preform 10.

The grip plate 4 is movable with respect to the molding device in order to pick up the preforms.

The grip plate 4 can furthermore move on command along at least one positioning direction that is substantially perpendicular to the axis of the preforms 10 so as to arrange the preforms 10 extracted in each instance at the cooling channels 22 or at the grip bodies 24.

The receptacles 3 are arranged like a matrix on a plane of arrangement.

Conveniently, the cooling plate 21 is provided with crossing openings 26 for the grip bodies 24 during the step of engagement with the respective preforms 10 and in the step of extraction of the preforms 10.

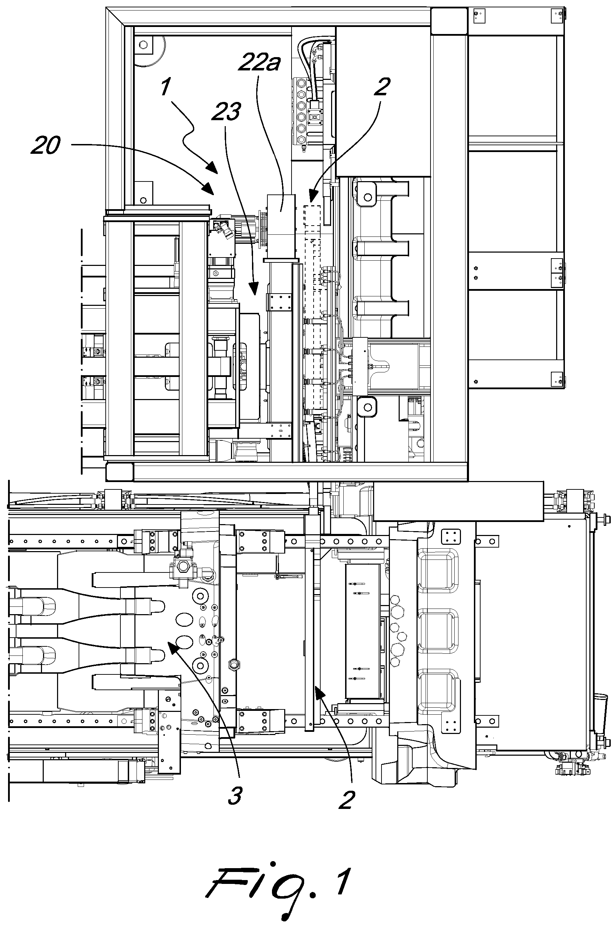

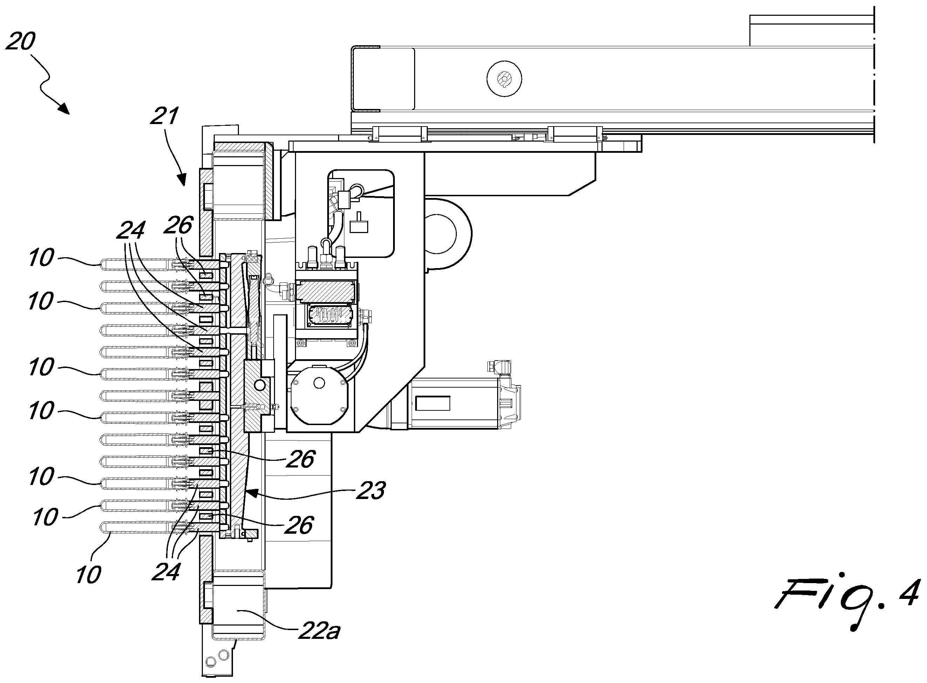

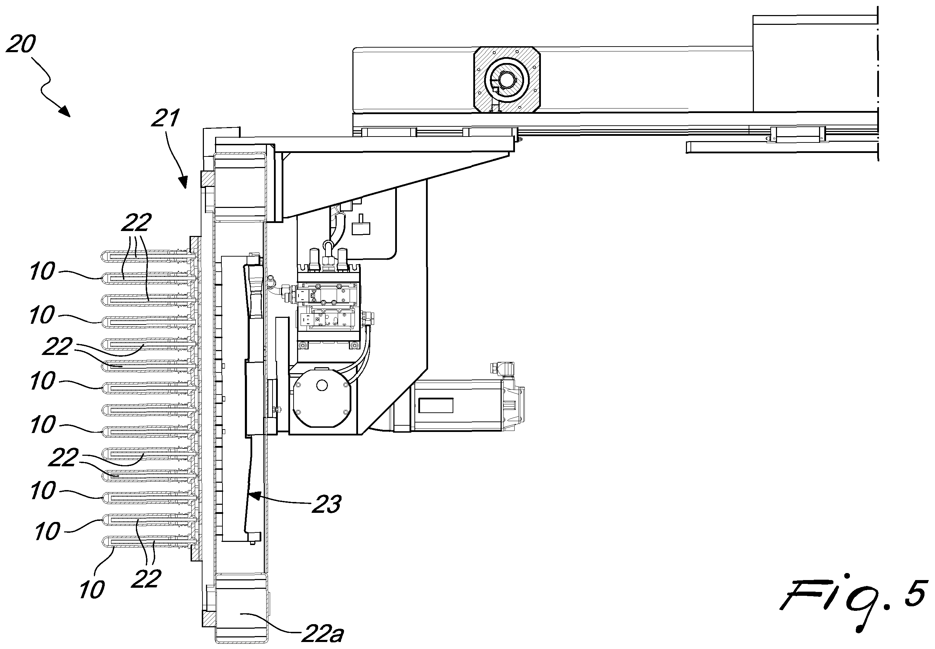

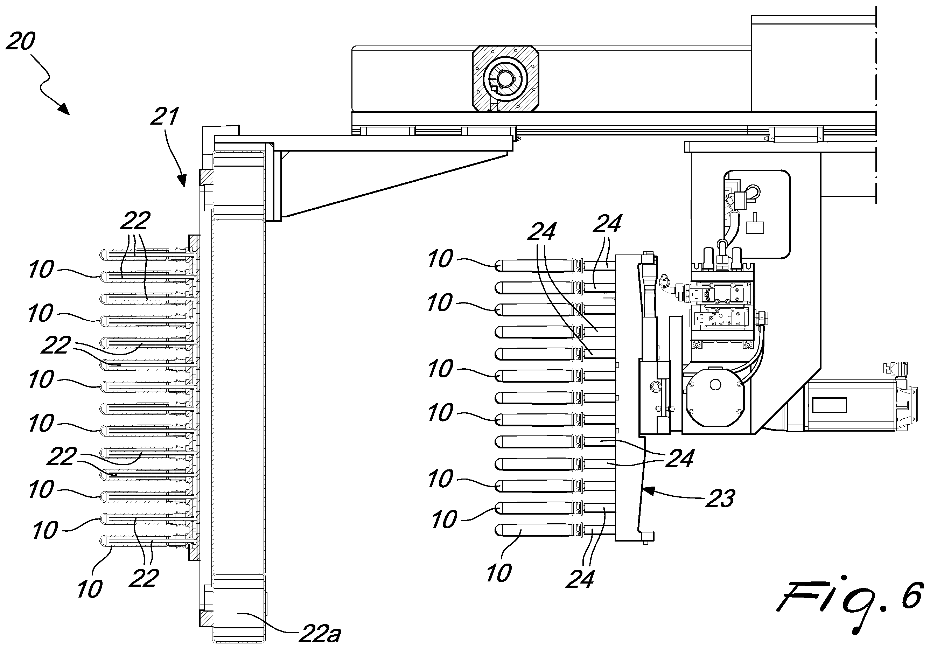

With reference to the embodiment shown in Figures 1 to 6, the cooling plate 21 can define a plurality of crossing openings 26 designed to be crossed by a respective grip body 24.

However, it has been found that it is particularly advantageous that the crossing openings are formed by a plurality of slits 26a with a substantially vertical extension.

Conveniently, the slits 26a are open downward.

In practice, in this constructive variation, if a preform 10, for any reason, is not picked up in an optimum manner by the grip bodies 24, it can fall freely without risking getting stuck in the crossing opening 26.

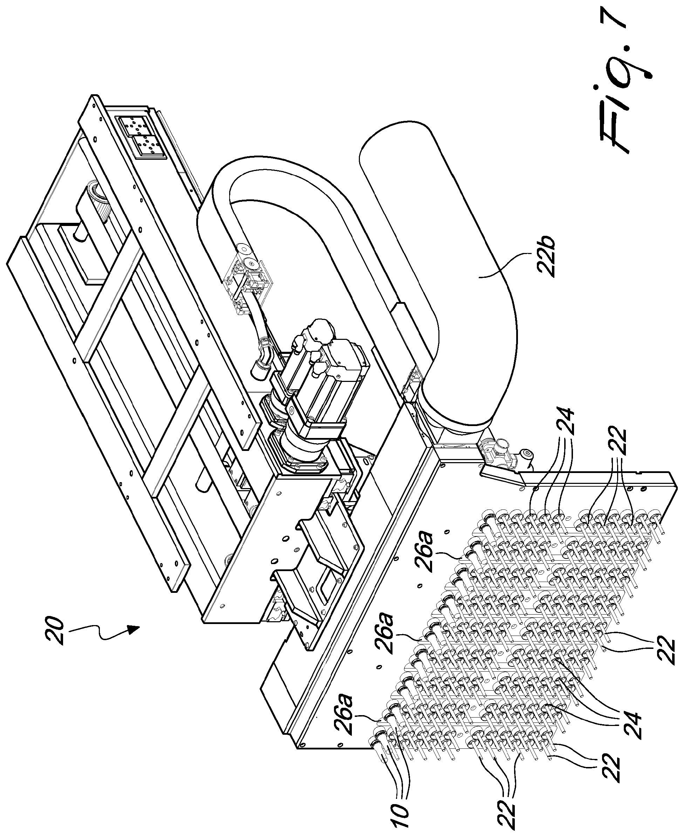

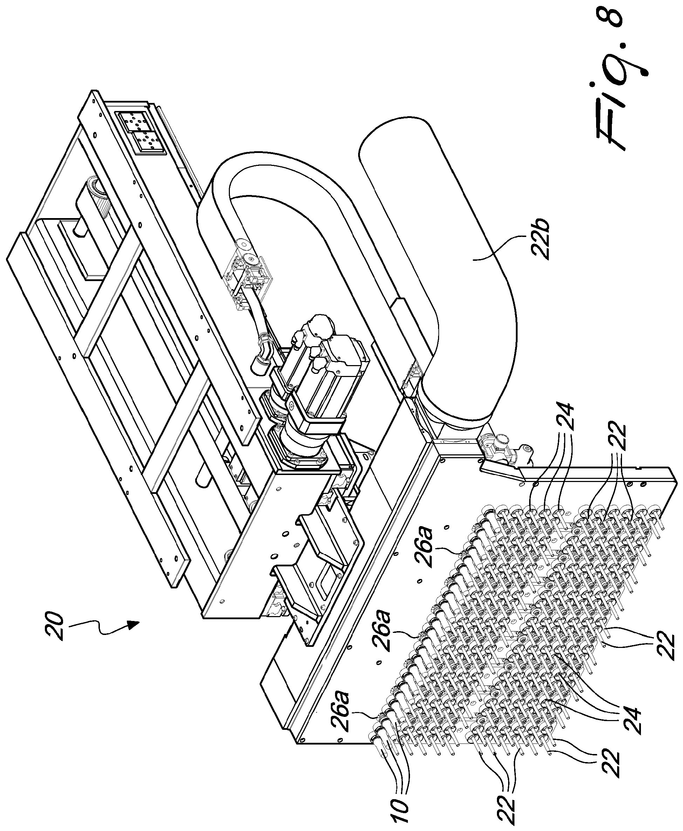

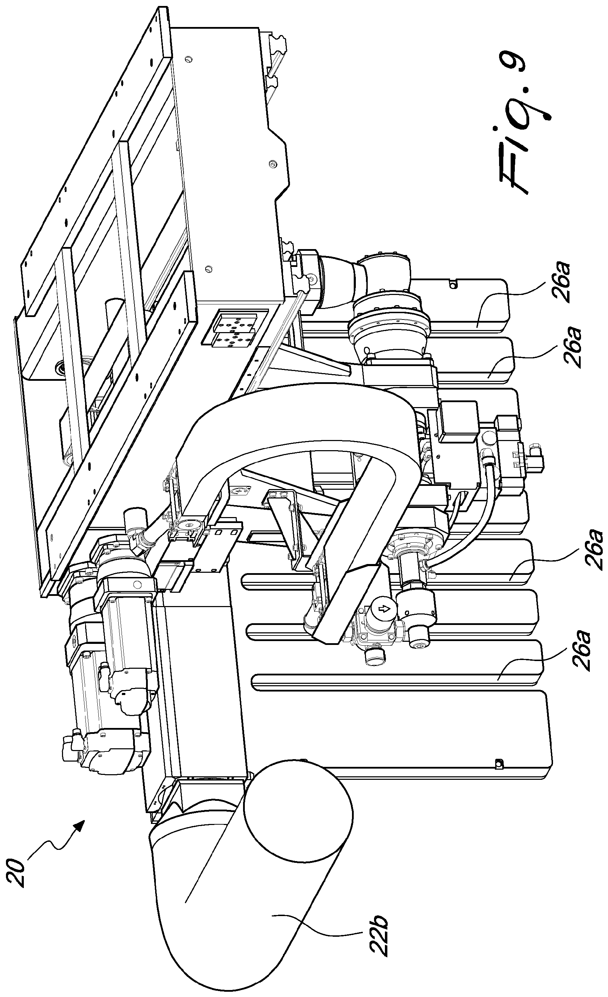

With reference to the constructive variation shown in Figures 7 to 9, it has been found that it is possible to use a single device for producing air, and in particular a single flexible tubular element 22b connected to the cooling plate 21.

In fact, this embodiment allows, with the help of deflectors and/or of particular geometries of the channels, to ensure a substantially even flow on all the cooling channels 22.

The evident advantage is that it is possible to use a single blower, if provided, and a single tubular element, thus providing space in the lower part of the grip assembly 2 with consequent facilitation in the access and management of the rotation of the unloading plate 23, and allowing to have regions in which the preforms that are not gripped correctly can stop.

Conveniently, the cooling plate 21 is arranged substantially parallel to the plane of arrangement of the receptacles 3.

In particular, the cooling plate 21 can move between the spaced position and the closer position along a movement direction 100 that is substantially perpendicular to its plane of arrangement.

Advantageously, the unloading plate 23 can move between a disengagement position, in which the grip bodies 24 are arranged on the opposite side of the grip assembly 2 with respect to the cooling plate 21, and an engagement position, in which the grip bodies 21 are at least partially arranged on the same side of the grip assembly 2 with respect to the cooling plate 21 in order to allow its engagement with a respective preform 10.

Conveniently, the unloading plate 23 can move, in its disengagement position, between a condition for retaining the respective preforms 10 and a position for unloading the respective preforms 10.

Advantageously, the unloading plate 23 in the engagement position is arranged so that its plane of arrangement is arranged substantially vertically, while it is convenient to provide that the plane of arrangement, in the unloading position, is arranged substantially horizontally so that the preforms 10 are directed downward.

Preferably, the grip bodies 24 comprise a retention device for a respective preform 10.

The retention device can be actuated on command in order to pass between an active condition, in which it allows the locking of the respective preform 10, and an inactive condition, in which it allows coupling and uncoupling with the respective preform 10.

The retention device comprises an engagement head which is associated with actuation means of the mechanical type or pneumatic type.

The operation of the device 1 is as follows.

At each molding cycle, the grip assembly 2 is moved in order to allow the transfer of the preforms 10 that have just been molded in respective receptacles formed at the grip assembly 2 and to arrange it facing the cooling and extraction assembly 20.

At this point, the cooling plate 21 is moved on command from the position that is spaced from the grip assembly 2 toward the position that is closer to the grip assembly 2.

In the closer position, the cooling channels 22 are arranged at the cavities of the respective preforms 10 to be cooled and the air sent toward the cooling channels is then directed inside said preforms 10 in order to determine their cooling by convection of the injected air.

While the cooling plate 21 is moved to the closer position, the grip bodies 24 supported by the unloading plate 23 are moved to cross the cooling plate 21 in order to engage respective preforms 10 (not engaged by the cooling channels 22) which are to be extracted from their respective receptacles, having already previously performed one or more cycles for injecting air by means of the cooling channels 22.

In the meantime, the cooling channels 22 continue to inject air into the respective preforms 10 while the grip bodies 24 are moved to the retention condition so as to lock thereon the respective preform 10.

At this point, the unloading plate 23 and, with a conveniently synchronized movement, the cooling plate 21 are moved away from the grip assembly 2 so as to disengage the cooling channels 22 from the respective preform 10, and to move the preforms 10 retained by the grip bodies 24 so that they cross the cooling plate 21 in order to reach its disengagement position, and therefore, from the condition for retention of the respective preforms 10, to the position for unloading the respective preforms 10, by means of a downward rotation about a substantially horizontal pivoting axis.

In the meantime, the preform molding device has completed a new molding cycle and the still-warm preforms are transferred at the receptacles of the grip assembly 2 that have just been freed.

The grip assembly 2 then moves to a position in which the receptacles are offset with respect to the previous position, so that the grip bodies 24 can engage the preforms 10 that have already finished the cooling cycles.

The proposed solution, by making the cooling step substantially independent of the unloading step, allows to optimize the operations for cooling (making them dependent only on the molding steps) and unloading (with movement dynamics that can be slower indeed because of the longer time made available by the separation of the cycles).

Furthermore, the device according to the invention allows to adjust the position of the cooling channels 22 without worrying about the movement of the grip bodies.

The invention thus conceived is susceptible of numerous modifications and variations, all of which are within the scope of the appended claims. The invention is set out in the appended set of claims.

In practice, the materials used, so long as they are compatible with the specific use, as well as the shapes and dimensions, may be any according to the requirements.

## Claims

1. A device (1) for the cooling and extraction of preforms (10) for the manufacture of plastic containers, comprising at least one grip assembly (2) which forms a plurality of receptacles for respective preforms (10) and means for transferring the preforms that are still warm from an injection molding device to said grip assembly (2), wherein the device (1) comprises a cooling and extraction assembly (20) which comprises a cooling plate (21) which is arranged so as to face said grip assembly (2) and can move on command between a position that is closer to said grip assembly (2) and a position that is spaced from said grip assembly (2), said cooling plate (21) supporting a plurality of cooling channels (22) which are designed, with said cooling plate (21) in said closer position, to lead into a respective preform (10) accommodated in a respective receptacle in order to convey a jet of air inside said preform (10) so as to increase its cooling rate, said cooling and extraction assembly (20) comprising an unloading plate (23) which is arranged on the opposite side of said grip assembly (2) with respect to said cooling plate (21) wherein the unloading plate (23) supports a plurality of grip bodies (24) which can be moved on command in order to pass through said cooling plate (21) so as to engage selectively, with said cooling plate (21) in the closer position, with a respective preform (10) in order to allow its extraction from the respective receptacle wherein said cooling plate (21) is provided with crossing openings (26) for said grip bodies (24) during the step of engagement with the respective preforms (10) and in the step of extraction of said preforms (10) **characterized in that** said crossing openings (26) comprise a plurality of slits (26a) with a substantially vertical extension.

2. The device according to claim 1, **characterized in that** said grip assembly (2) comprises a grip plate which supports said plurality of receptacles for respective preforms (10).

3. The device according to one or more of the preceding claims, **characterized in that** said receptacles are arranged like a matrix on a plane of arrangement.

4. The device (1) according to one or more of the preceding claims, **characterized in that** said cooling plate (21) is arranged substantially parallel to the plane of arrangement of said receptacles, said cooling plate (21) being movable between said spaced position and said closer position along a movement direction that is substantially perpendicular to its plane of arrangement.

5. The device (1) according to one or more of the preceding claims, **characterized in that** said unloading plate (23) can move between a disengagement position, in which said grip bodies (24) are arranged on the opposite side of said grip assembly (2) with respect to said cooling plate (21), and an engagement position, in which said grip bodies (24) are at least partially arranged on the same side of said grip assembly (2) with respect to said cooling plate (21) in order to allow its engagement with a respective preform (10).

6. The device (1) according to one or more of the preceding claims, **characterized in that** said unloading plate (23) can move, in said disengagement position, between a condition for retaining the respective preforms (10) and a position for unloading the respective preforms (10).

7. The device (1) according to one or more of the preceding claims, **characterized in that** said grip bodies (24) comprise a retention device for a respective preform (10) which can be actuated on command in order to pass between an active condition, in which it allows the locking of the respective preform (10), and an inactive condition, in which it allows coupling and uncoupling with the respective preform (10).

8. The device (1) according to claim 7, **characterized in that** said retention device comprises an engagement head which is associated with actuation means of the mechanical or pneumatic type.

## Patentansprüche

1. Eine Vorrichtung (1) zur Kühlung und Extraktion von Vorformlingen (10) zur Herstellung von Kunststoffbehältern, die mindestens einen Greifaufbau (2) umfasst, welcher eine Vielzahl von Aufnahmevorrichtungen für entsprechende Vorformlinge (10) formt, und Mittel zum Überführen der Vorformlinge, die noch warm von einer Spritzgießvorrichtung sind, an den Greifaufbau (2); wobei die Vorrichtung (1) einen Kühl- und Extraktionsaufbau (20) umfasst, der eine Kühlplatte (21) umfasst, welche dem Greifaufbau (2) zugewandt angeordnet ist und sich auf Befehl zwischen einer Position, die näher an dem Greifaufbau (2) ist, und einer Position bewegen kann, die von dem Greifaufbau (2) beabstandet ist; wobei die Kühlplatte (21) eine Vielzahl von Kühlkanälen (22) trägt, die dazu dienen, wenn die Kühlplatte (21) in der näheren Position ist, in einen jeweiligen Vorformling (10) zu führen, der in einer entsprechenden Aufnahmevorrichtung untergebracht ist, um einen Luftstoß in den Vorformling (10) abzugeben und so seine Kühlrate zu erhöhen; wobei der Kühl- und Extraktionsaufbau (20) eine Abladeplatte (23) umfasst, welche auf der gegenüberliegenden Seite des Greifaufbaus (2) mit Bezug auf die Kühlplatte (21) angeordnet ist, wobei die Abladeplatte (23) eine Vielzahl von Greifkörpern (24) trägt, die auf Befehl bewegt werden können, um die Kühlplatte (21) zu durchdringen, um wahlweise, wenn die Kühlplatte (21) in der näheren Position ist, in Eingriff mit einem entsprechenden Vorformling (10) zu stehen, um seine Extraktion aus der jeweiligen Aufnahmevorrichtung zu ermöglichen, wobei die Kühlplatte (21) mit Durchquerungsöffnungen (26) für die Greifkörper (24) während des Schritts des Eingriffs mit den jeweiligen Vorformlingen (10) und während des Schritts der Extraktion der Vorformlinge (10) versehen ist; **dadurch gekennzeichnet, dass** die Durchquerungsöffnungen (26) eine Vielzahl von Schlitzen (26a) mit im Wesentlichen vertikaler Ausdehnung umfassen.

2. Die Vorrichtung gemäß Anspruch 1, **dadurch gekennzeichnet, dass** der Greifaufbau (2) eine Greifplatte umfasst, die die Vielzahl von Aufnahmevorrichtungen für entsprechende Vorformlinge (10) trägt.

3. Die Vorrichtung gemäß einem oder mehreren der obigen Ansprüche, **dadurch gekennzeichnet, dass** die Aufnahmevorrichtungen wie eine Matrix auf einer Anordnungsebene angeordnet sind.

4. Die Vorrichtung (1) gemäß einem oder mehreren der obigen Ansprüche, **dadurch gekennzeichnet, dass** die Kühlplatte (21) im Wesentlichen parallel zur Anordnungsebene der Aufnahmevorrichtungen angeordnet ist, wobei die Kühlplatte (21) in einer Bewegungsrichtung, die im Wesentlichen senkrecht zu ihrer Anordnungsebene ist, zwischen der beabstandeten Position und der näheren Position beweglich ist.

5. Die Vorrichtung (1) gemäß einem oder mehreren der obigen Ansprüche, **dadurch gekennzeichnet, dass** sich die Abladeplatte (23) zwischen einer Trennungsposition, in welcher die Greifkörper (24) auf der gegenüberliegenden Seite des Greifaufbaus (2) mit Bezug auf die Kühlplatte (21) angeordnet sind, und einer Eingriffsposition bewegen kann, in welcher die Greifkörper (24) zumindest teilweise auf derselben Seite des Greifaufbaus (2) mit Bezug auf die Kühlplatte (21) angeordnet sind, um seinen Eingriff mit einem entsprechenden Vorformling (10) zu ermöglichen.

6. Die Vorrichtung (1) gemäß einem oder mehreren der obigen Ansprüche, **dadurch gekennzeichnet, dass** die Abladeplatte (23) sich in der Trennungsposition zwischen einem Zustand zum Halten der jeweiligen Vorformlinge (10) und einer Position zum Abladen der jeweiligen Vorformlinge (10) bewegen kann.

7. Die Vorrichtung (1) gemäß einem oder mehreren der obigen Ansprüche, **dadurch gekennzeichnet, dass** die Greifkörper (24) eine Haltevorrichtung für einen entsprechenden Vorformling (10) umfassen, die auf Befehl betätigt werden können, um zwischen einem aktiven Zustand, in welchem sie das Blockieren des jeweiligen Vorformlings (10) ermöglicht, und einem inaktiven Zustand zu wechseln, in dem sie das Koppeln und Entkoppeln mit dem jeweiligen Vorformling (10) ermöglicht.

8. Die Vorrichtung (1) gemäß Anspruch 7, **dadurch gekennzeichnet, dass** die Haltevorrichtung einen Eingriffskopf umfasst, der mit Antriebsmitteln vom mechanischen oder pneumatischen Typ verbunden ist.

## Revendications

1. Dispositif (1) pour le refroidissement et l'extraction de préformes (10) destinées à la fabrication de récipients en matière plastique, comprenant au moins un ensemble de préhension (2) qui forme une pluralité de réceptacles pour les préformes respectives (10) et des moyens pour transférer les préformes encore chaudes d'un dispositif de moulage par injection vers ledit ensemble de préhension (2), où le dispositif (1) comprend un ensemble de refroidissement et d'extraction (20) qui comprend une plaque de refroidissement (21) qui est disposée de manière à faire face audit ensemble de préhension (2) et qui peut se déplacer sur commande entre une position plus proche dudit ensemble de préhension (2) et une position espacée dudit ensemble de préhension (2), ladite plaque de refroidissement (21) supportant une pluralité de canaux de refroidissement (22) qui sont conçus, avec ladite plaque de refroidissement (21) dans ladite position plus proche, pour déboucher dans une préforme respective (10) logée dans un réceptacle respectif afin de convoyer un jet d'air à l'intérieur de ladite préforme (10) de manière à augmenter sa vitesse de refroidissement, ledit ensemble de refroidissement et d'extraction (20) comprenant une plaque de déchargement (23) qui est disposée sur le côté opposé dudit ensemble de préhension (2) par rapport à ladite plaque de refroidissement (21), où la plaque de déchargement (23) supporte une pluralité de corps de préhension (24) qui peuvent être déplacés sur commande afin de passer à travers ladite plaque de refroidissement (21) de manière à s'engager sélectivement, avec ladite plaque de refroidissement (21) dans la position plus proche, avec une préforme respective (10) afin de permettre son extraction du réceptacle respectif, où ladite plaque de refroidissement (21) est pourvue d'ouvertures transversales (26) pour lesdits corps de préhension (24) pendant l'étape d'engagement avec les préformes respectives (10) et pendant l'étape d'extraction desdites préformes (10), **caractérisé en ce que** lesdites ouvertures transversales (26) comprennent une pluralité de fentes (26a) avec une extension sensiblement verticale.

2. Le dispositif selon la revendication 1, **caractérisé en ce que** ledit ensemble de préhension (2) comprend une plaque de préhension qui supporte ladite pluralité de réceptacles pour les préformes respectives (10).

3. Le dispositif selon une ou plusieurs des revendications précédentes, **caractérisé en ce que** lesdits réceptacles sont disposés comme une matrice sur un plan d'agencement.

4. Dispositif (1) selon une ou plusieurs des revendications précédentes, **caractérisé en ce que** ladite plaque de refroidissement (21) est disposée sensiblement parallèlement au plan de disposition desdits réceptacles, ladite plaque de refroidissement (21) étant mobile entre ladite position espacée et ladite position plus proche selon une direction de mouvement qui est sensiblement perpendiculaire à son plan d'agencement.

5. Dispositif (1) selon une ou plusieurs des revendications précédentes, **caractérisé en ce que** ladite plaque de déchargement (23) peut se déplacer entre une position de désengagement, dans laquelle lesdits corps de préhension (24) sont disposés sur le côté opposé dudit ensemble de préhension (2) par rapport à ladite plaque de refroidissement (21), et une position d'engagement, dans laquelle lesdits corps de préhension (24) sont au moins partiellement disposés du même côté dudit ensemble de préhension (2) par rapport à ladite plaque de refroidissement (21) afin de permettre son engagement avec une préforme respective (10) .

6. Le dispositif (1) selon une ou plusieurs des revendications précédentes, **caractérisé en ce que** ladite plaque de déchargement (23) peut se déplacer, dans ladite position de désengagement, entre une condition pour retenir les préformes respectives (10) et une position pour décharger les préformes respectives (10).

7. Le dispositif (1) selon une ou plusieurs des revendications précédentes, **caractérisé en ce que** lesdits corps de préhension (24) comprennent un dispositif de retenue pour une préforme respective (10) qui peut être actionné sur commande afin de passer entre une condition active, dans laquelle il permet le verrouillage de la préforme respective (10), et une condition inactive, dans laquelle il permet l'accouplement et le désaccouplement avec la préforme respective (10).

8. Le dispositif (1) selon la revendication 7, **caractérisé en ce que** ledit dispositif de retenue comprend une tête d'engagement qui est associée à des moyens d'actionnement de type mécanique ou pneumatique.
